# EUROPEAN PATENT APPLICATION

(11) **EP 3 285 205 A1**
(43) Date of publication of application: **21.02.2018**
(21) Application number: 17163360.5
(22) Date of filing: 28.03.2017
(51) Int. Cl.: G06K 9/00

(54) **FINGERPRINT RECOGNITION COMPONENT, PRESSURE DETECTION METHOD AND FINGERPRINT RECOGNITION IC**

(30) Priority: 18.08.2016 CN 201610686151
(71) Applicant: Beijing Xiaomi Mobile Software Co., Ltd., Beijing 100085 (CN)
(72) Inventor: JIANG, Zhongsheng, Beijing, Beijing 100085 (CN); TANG, Ju, Beijing, Beijing 100085 (CN); WANG, Gang, Beijing, Beijing 100085 (CN)
(74) Representative: dompatent von Kreisler Selting Werner - Partnerschaft von Patent- und Rechtsanwälten mbB

(57) **Abstract**

The present disclosure relates to a fingerprint recognition component, which belongs to the field of fingerprint recognition. The fingerprint recognition component includes a fingerprint sensor component, a fingerprint recognition integrated circuit (IC) and a reference electrode disposed below the fingerprint sensor component; the fingerprint sensor component is electrically connected with the fingerprint recognition IC, and the fingerprint sensor component contains a sensing electrode; the fingerprint recognition IC can determine a pressure value on the fingerprint recognition component by monitoring a capacitance change between the sensing electrode and the reference electrode when a fingerprint input operation performed on the fingerprint sensor component is detected, in order to carry out the subsequent differential processing, thereby expanding application scenarios of the fingerprint recognition, and improving the user experience.

## Description

### TECHNICAL FIELD

The present disclosure generally relates to the field of fingerprint recognition, and more particularly, to a fingerprint recognition component, a pressure detection method and a fingerprint recognition integrated circuit (IC).

### BACKGROUND

With the continuous development of fingerprint recognition technology, more and more electronic apparatuses such as mobile phones, tablet PCs, and the like use a fingerprint recognition component to enhance the user experience.

The fingerprint recognition solution commonly used in current electronic apparatuses is to combine together the fingerprint recognition component with a physical button, such that the fingerprint recognition component and the button are compatible. For example, when an electronic apparatus is unlocked by a user using a fingerprint, the physical button integrated with the fingerprint recognition component is pressed, and when the fingerprint collected by the fingerprint recognition component is successfully recognized by the electronic device, a screen of the electronic device may be lightened, and the unlocked screen interface is displayed.

### SUMMARY

Embodiments of the present disclosure provide a fingerprint recognition component, a pressure detection method and a fingerprint recognition integrated circuit (IC). The technical solutions are as follows.

According to a first aspect of embodiments of the present disclosure, there is provided a fingerprint recognition component, applied in an electronic apparatus, the fingerprint recognition component including: a fingerprint sensor component, a fingerprint recognition IC and a reference electrode disposed below the fingerprint sensor component;
the fingerprint sensor component is electrically connected with the fingerprint recognition IC, and the fingerprint sensor component contains a sensing electrode;
the fingerprint recognition IC is configured to monitor a capacitance change amount between the sensing electrode and the reference electrode when a fingerprint input operation performed on the fingerprint sensor component is detected, and determine a pressure value applied on the fingerprint sensor component in accordance with the capacitance change amount.

Optionally, the sensing electrode is composed of a plurality of independent capacitive sensing fingerprint sensors, and the fingerprint recognition component further includes an all-in-one switch;
all or part of the plurality of independent capacitive sensing fingerprint sensors are electrically connected with one end of the all-in-one switch;
the other end of the all-in-one switch is electrically connected with the fingerprint recognition IC.

Optionally, the reference electrode is grounded, or the reference electrode is applied with an excitation electric signal.

Optionally, the fingerprint recognition IC is electrically connected with a processor in an electronic apparatus,
the fingerprint recognition IC is further configured to generate a successful fingerprint recognition response in accordance with the determined pressure value when an input fingerprint corresponding to the fingerprint input operation is recognized and the recognition is successful; and
send the successful fingerprint recognition response to the processor.

Optionally, the fingerprint recognition IC is particularly configured to generate a first successful fingerprint recognition response when the recognition for the input fingerprint is successful and the pressure value is greater than the first pressure threshold, the first successful fingerprint recognition response indicating that an operation type of the fingerprint input operation is a heavy press input operation;
the fingerprint recognition IC is particularly configured to generate a second successful fingerprint recognition response when the recognition for the input fingerprint is successful and the pressure value is not greater than the first pressure threshold, the second successful fingerprint recognition response indicating the operation type of the fingerprint input operation is a light touch input operation.

Optionally, the fingerprint recognition IC is further configured to recognize the input fingerprint corresponding to the fingerprint input operation when the determined pressure value is greater than a second pressure threshold.

According to a second aspect of embodiments of the present disclosure, there is provided a pressure detection method applied in a fingerprint recognition IC of a fingerprint recognition component, the fingerprint recognition component further includes a fingerprint sensor component and a reference electrode disposed below the fingerprint sensor component, the fingerprint sensor component is electrically connected with the fingerprint recognition IC, the fingerprint sensor component contains a sensing electrode, and the method includes:
monitoring a capacitance change amount between the sensing electrode and the reference electrode when a fingerprint input operation performed on the fingerprint sensor component is detected; and
determining a pressure value applied on the fingerprint sensor component in accordance with the capacitance change amount.

Optionally, the fingerprint recognition IC is electrically connected with a processor in an electronic apparatus, and the method further includes:
generating a successful fingerprint recognition response in accordance with the determined pressure value when an input fingerprint corresponding to the fingerprint input operation is recognized and the recognition is successful; and
sending the successful fingerprint recognition response to the processor.

Optionally, the generating the successful fingerprint recognition response in accordance with the determined pressure value when the input fingerprint corresponding to the fingerprint input operation is recognized and the recognition is successful includes:
generating a first successful fingerprint recognition response when the recognition for the input fingerprint is successful and the pressure value is greater than the first pressure threshold, the first successful fingerprint recognition response indicating that an operation type of the fingerprint input operation is a heavy press input operation; and
generating a second successful fingerprint recognition response when the recognition for the input fingerprint is successful and the pressure value is not greater than the first pressure threshold, , the second successful fingerprint recognition response indicating the operation type of the fingerprint input operation is a light touch input operation of light touch.

Optionally, the method further includes:
recognizing the input fingerprint corresponding to the fingerprint input operation when the determined pressure value is greater than a second pressure threshold.

According to a third aspect of embodiments of the present disclosure, there is provided a fingerprint recognition IC applied in a fingerprint recognition component, the fingerprint recognition component further includes a fingerprint sensor component and a reference electrode disposed below the fingerprint sensor component, the fingerprint sensor component is electrically connected with the fingerprint recognition IC, the fingerprint sensor component contains a sensing electrode, and the fingerprint recognition IC includes:
a monitoring module, configured to monitor a capacitance change amount between the sensing electrode and the reference electrode when a fingerprint input operation performed on the fingerprint sensor component is detected; and
a determination module, configured to determine a pressure value applied on the fingerprint sensor component in accordance with the capacitance change amount.

Optionally, the fingerprint recognition IC is electrically connected with a processor in an electronic apparatus, and the fingerprint recognition IC further includes:
a generation module, configured to generate a successful fingerprint recognition response in accordance with the determined pressure value when an input fingerprint corresponding to the fingerprint input operation is recognized and the recognition is successful; and
a sending module, configured to send the successful fingerprint recognition response to the processor.

Optionally, the generation module includes:
a first generation sub-module, configured to generate a first successful fingerprint recognition response when the recognition for the input fingerprint is successful and the pressure value is greater than the first pressure threshold, the first successful fingerprint recognition response indicating that an operation type of the fingerprint input operation is a heavy press input operation; and
a second generation sub-module, configured to generate a second successful fingerprint recognition response when the recognition for the input fingerprint is successful and the pressure value is not greater than the first pressure threshold, the second successful fingerprint recognition response indicating the operation type of the fingerprint input operation is an input operation of light touch.

Optionally, the fingerprint recognition IC further includes:
a recognition module, configured to recognize the input fingerprint corresponding to the fingerprint input operation when the determined pressure value is greater than a second pressure threshold.

According to a fourth aspect of embodiments of the present disclosure, there is provided an electronic apparatus including the fingerprint recognition component described in the first aspect of embodiments of the present disclosure.

The technical solutions provided by embodiments of the present disclosure may have the following advantageous effects.

In view of the above, the fingerprint recognition component provided by embodiments of the present disclosure includes a fingerprint sensor component, a fingerprint recognition IC and a reference electrode disposed below the fingerprint sensor component, the fingerprint sensor component is electrically connected with the fingerprint recognition IC, and contains a sensing electrode, and the fingerprint recognition IC is configured to monitor a capacitance change amount between the sensing electrode and the reference electrode when a fingerprint input operation performed on the fingerprint sensor component is detected, and determine a pressure value applied on the fingerprint sensor component in accordance with the capacitance change amount. The reference electrode is disposed below the fingerprint sensor component in the fingerprint recognition component of the electronic apparatus, and the reference electrode and the sensing electrode included in the fingerprint sensor component constitute a capacitor. When the fingerprint recognition IC detects that there is a fingerprint input operation, the fingerprint recognition IC may determine the pressure value on the fingerprint recognition component by monitoring the capacitance change between the reference electrode and the sensing electrode, in order to carry out the subsequent differential processing, thereby expanding application scenarios of the fingerprint recognition, and improving the user experience.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a structural schematic diagram showing a fingerprint recognition component according to an exemplary embodiment;
Fig. 2 is a structural schematic diagram showing a fingerprint recognition component according to another exemplary embodiment;
Fig. 3 is a schematic diagram showing a connection between a fingerprint sensor and a fingerprint recognition IC involved in the embodiment shown in Fig. 2;
Fig. 4 is a flowchart showing a pressure detection method according to an exemplary embodiment;
Fig. 5 is a flowchart showing a pressure detection method according to an exemplary embodiment; and
Fig. 6 is a block diagram showing a fingerprint recognition IC according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

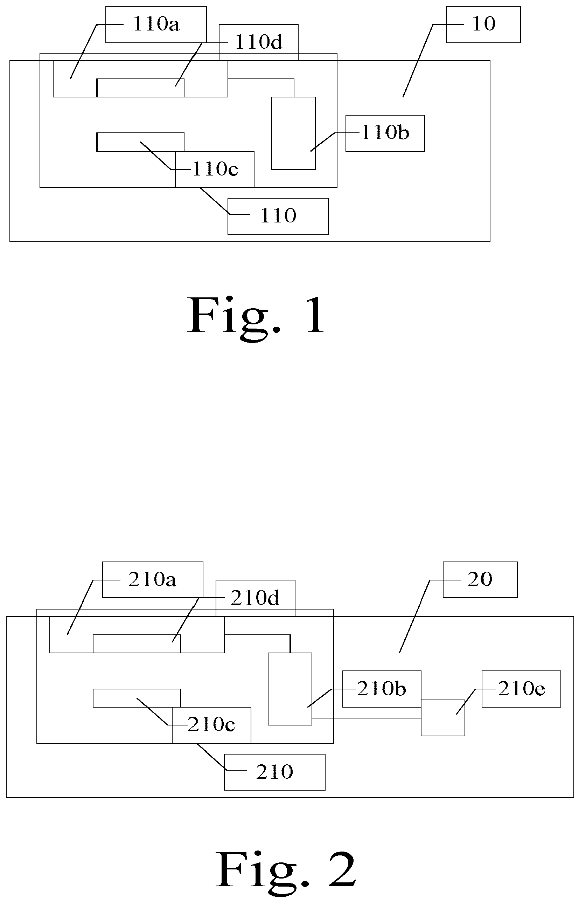

Fig. 1 is a structural schematic diagram showing a fingerprint recognition component according to an exemplary embodiment. The fingerprint recognition component 110 is provided in an electronic apparatus 10 such as a smart phone, a tablet, an e-book reader, a touch-sensitive laptop or a smart wearable apparatus. As shown in Fig. 1, the fingerprint recognition component 110 includes a fingerprint sensor component 110a, a fingerprint recognition integrated circuit (IC) 110b and a reference electrode 110c disposed below the fingerprint sensor component.

The fingerprint sensor component 110a is electrically connected with the fingerprint recognition IC 110b, and the fingerprint sensor component 110a contains a sensing electrode 110d.

The fingerprint recognition IC 110b is configured to monitor a capacitance change amount between the sensing electrode 110d and the reference electrode 110c when a fingerprint input operation performed on the fingerprint sensor component 110 is detected, and determine a pressure value applied on the fingerprint sensor component 110 in accordance with the capacitance change amount.

In view of the above, the fingerprint recognition component provided by embodiments of the present disclosure includes a fingerprint sensor component, a fingerprint recognition IC and a reference electrode disposed below the fingerprint sensor component, the fingerprint sensor component is electrically connected with the fingerprint recognition IC, the fingerprint sensor component contains a sensing electrode, and the fingerprint recognition IC is configured to monitor a capacitance change amount between the sensing electrode and the reference electrode when a fingerprint input operation performed on the fingerprint sensor component is detected, and determine a pressure value applied on the fingerprint sensor component in accordance with the capacitance change amount. The reference electrode is disposed below the fingerprint sensor component in the fingerprint recognition component of the electronic apparatus, and the reference electrode and the sensing electrode included in the fingerprint sensor component constitute a capacitor. When the fingerprint recognition IC detects that there is a fingerprint input operation, the fingerprint recognition IC may determine the pressure value on the fingerprint recognition component by monitoring the capacitance change between the reference electrode and the sensing electrode, in order to carry out the subsequent differential processing, thereby expanding application scenarios of the fingerprint recognition, and improving the user experience.

Fig. 2 is a structural schematic diagram showing a fingerprint recognition component according to another exemplary embodiment. The fingerprint recognition component 210 is provided in an electronic apparatus 20 such as a smart phone, a tablet, an e-book reader, a touch-sensitive laptop or a smart wearable apparatus. As shown in Fig. 2, the fingerprint recognition component 210 includes a fingerprint sensor component 210a, a fingerprint recognition IC 210b and a reference electrode 210c disposed below the fingerprint sensor component.

The fingerprint sensor component 210a is electrically connected with the fingerprint recognition IC 210b, and the fingerprint sensor component 210a contains a sensing electrode 210d.

The fingerprint recognition IC 210b is configured to monitor a capacitance change amount between the sensing electrode 210d and the reference electrode 210c when a fingerprint input operation performed on the fingerprint sensor component 210 is detected, and determine a pressure value applied on the fingerprint sensor component 210 in accordance with the capacitance change amount.

In an embodiment of the present disclosure, the reference electrode 210c may be a metallic middle frame of the electronic apparatus, or the reference electrode 210c may also be other conductive dielectric layers. For example, the conductive dielectric layer may be made of ITO (indium tin oxide) thin layer, FPC (flexible printed circuit), or PET (polyethylene terephthalate) printed with a silver paste.

Optionally, in an embodiment of the present disclosure, a capacitive pressure sensor may be formed between the reference electrode 210c and the sensing electrode 210d, i.e., there is a gap between the reference electrode 210c and the sensing electrode 210d, and the reference electrode 210c and the sensing electrode 210d may be two electrodes of a capacitor. The capacitance of the capacitor is proportional to the distance between the two electrodes. The fingerprint recognition IC 210b may monitor the capacitance change amount between the reference electrode 210c and the sensing electrode 210d depending on the change in electrical parameters (such as current or charge amount) with the sensing electrode 210d.

For example, when a surface of the fingerprint recognition component 210 is pressed, a distance between the two electrodes decreases. The fingerprint recognition IC 210b may determine the pressure value subjected by the surface of the fingerprint recognition component 210 according to the change of the capacitance value.

The reference electrode 210c may be made of a high strength material, or the reference electrode 210 can be attached on a surface of the high strength material. The deformation resistance performance of the high strength material should be stronger than that of the forming material of the fingerprint sensor component 210a. Thus, when the fingerprint sensor component 210 is pressed by a finger of a user, the deformation of the reference electrode 210c may be smaller than the deformation of the sensing electrode 210d in the fingerprint sensor component 210a, such that the fingerprint recognition IC 210b can easily monitor the change of the capacitance.

Optionally, as shown in Fig. 2, the reference electrode 210c can be grounded, or the reference electrode 210c can also applied with an excitation electric signal to enhance the induction between the reference electrode 210c and the sensing electrode 210d so as to improve the signal-to-noise ratio. For example, the excitation electric signal may be an electric signal having a periodic square wave.

Optionally, since the sensing electrode and the reference electrode make up a capacitor, there is a voltage difference between the two sides. Therefore, in an embodiment of the present disclosure, an insulating layer is disposed in the gap between the sensing electrode and the reference electrode, and the insulating layer is made of a material having high dielectric constant, so as to avoid the breakdown of the capacitor due to the small distance between the touch sensor and the touch force sensor.

The insulating layer may be disposed to be close to the sensing electrode, or may be disposed to be close to the reference electrode.

Optionally, in another possible implementation, a flexible material having high dielectric constant may also be filled in the gap between the sensing electrode and the reference electrode, and the flexible material having high dielectric constant does not affect the change of the distance between the sensing electrode and the reference electrode when the fingerprint recognition component is pressed. Meanwhile, a support may be formed between the sensing electrode and the reference electrode.

Optionally, the sensing electrode 210d is composed of a plurality of independent capacitive sensing fingerprint sensors. The fingerprint recognition component 210 further includes an all-in-one switch 210e. All or part of the plurality of independent capacitive sensing fingerprint sensors are electrically connected with one end of the all-in-one switch 210e, and the other end of the all-in-one switch 210e is electrically connected with the fingerprint recognition IC 210b.

In an embodiment of the present disclosure, the fingerprint recognition component 210 may be a fingerprint recognition component based on the capacitive sensing principle. In the fingerprint recognition component based on the capacitive sensing principle, the fingerprint sensor component 210a is provided with a plurality of minute capacitive fingerprint sensors which are independent of each other and are electrically connected with the fingerprint recognition IC 210b. When the fingerprint is collected, a capacitance is formed between the convex portion of the fingerprint of the user and the capacitive sensing fingerprint sensor, and thus the charge of the capacitive fingerprint sensor changes. The fingerprint recognition IC 210b determines the convex and concave portions on the finger of the user by detecting the charge changes of respective capacitive fingerprint sensors, thereby achieving the purpose of collecting fingerprints.

In the embodiment of the present disclosure, the original capacitive fingerprint sensor in the fingerprint recognition component based on the capacitive sensing principle is used as one pole of a capacitor to form a capacitor with the reference electrode, while an area of one capacitive fingerprint sensor is usually very small, resulting in a small change in the amount of charge when the fingerprint sensor component 210 is pressed, which is disadvantageous for the fingerprint recognition IC 210b to monitor the change of the capacitance. Therefore, in the embodiment of the present disclosure, when the fingerprint recognition component is pressed, it is possible to collect the charge changes of some or all of the capacitive fingerprint sensors in the fingerprint recognition component, and then transmit the same to the fingerprint recognition IC 210b, such that the fingerprint recognition IC 210b can accurately measure the pressure value suffered by the fingerprint recognition component.

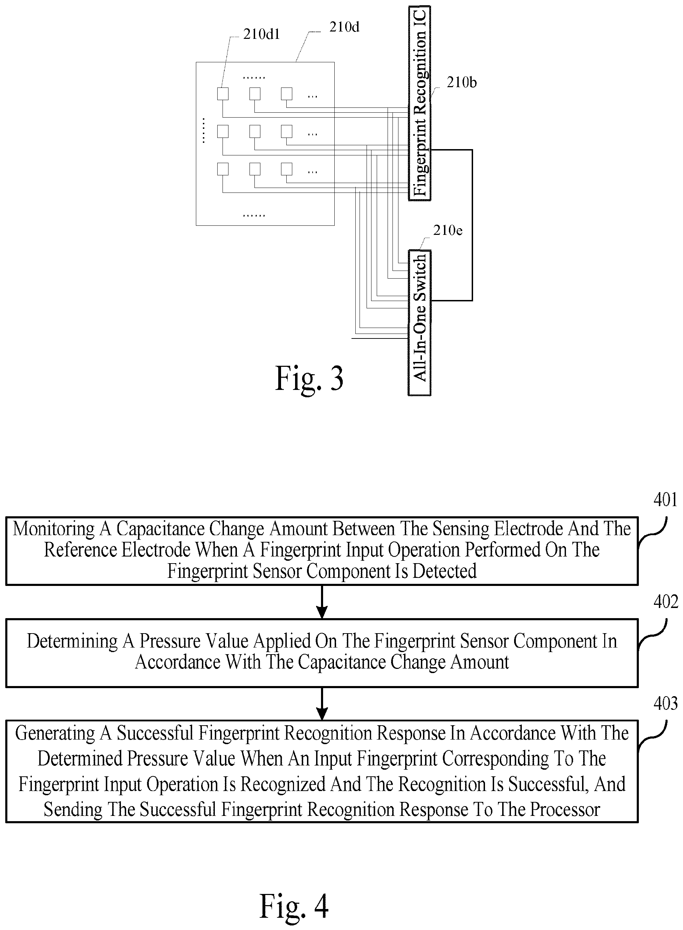

Fig. 3 is a schematic diagram showing a connection between a fingerprint sensor and a fingerprint recognition IC involved in the embodiment shown in Fig. 2. Referring to Fig. 3, the sensing electrode 210d in the fingerprint sensor component 210 is composed of a plurality of capacitive fingerprint sensors 210d1, and part or all of the fingerprint sensors in the plurality of capacitive fingerprint sensors 210d1 are each connected to one end of the all-in-one switch 210e. The other end of the all-in-one switch 210e is electrically connected with the fingerprint recognition IC 210b. When the fingerprint recognition component is pressed, the charge change or current detected by the fingerprint recognition IC 210b from the terminal electrically connected with the all-in-one switch 210e is a superposition of the charge changes or currents corresponding to all the capacitive fingerprint sensors 210d1 connected to the all-in-one switch 210e.

Optionally, the fingerprint recognition IC 210b is also electrically connected with a processor 220 in the electronic apparatus 20.

The fingerprint recognition IC 210b is further configured to generate a successful fingerprint recognition response in accordance with the determined pressure value when an input fingerprint corresponding to the fingerprint input operation is recognized and the recognition is successful, and send the successful fingerprint recognition response to the processor 220.

In an embodiment of the present disclosure, when the user presses the surface of the fingerprint recognition component 210 to perform the fingerprint input operation by the finger, if the fingerprint recognition IC 210b recognizes the input fingerprint successfully, the fingerprint recognition IC 210b may also generate a successful fingerprint recognition response, wherein the responses of successful fingerprint recognition corresponding to different pressure values may also different from each other. Thus the processor 220 in the electronic apparatus can perform different operations after the successful fingerprint recognition according to the different pressure values, thereby realizing the multi-level pressure application based on the fingerprint recognition, expanding application scenarios of the fingerprint recognition, and improving the user experience.

Optionally, the fingerprint recognition IC is particularly configured to generate a first successful fingerprint recognition response when the recognition for the input fingerprint is successful and the pressure value is greater than the first pressure threshold, the first successful fingerprint recognition response indicating that an operation type of the fingerprint input operation is a heavy press input operation.

The fingerprint recognition IC is particularly configured to generate a second successful fingerprint recognition response when the recognition for the input fingerprint is successful and the pressure value is not greater than the first pressure threshold, the second successful fingerprint recognition response indicating that the operation type of the fingerprint input operation is an input operation of light touch.

In an embodiment of the present disclosure, the electronic apparatus can divide the user's fingerprint input operation into two levels according to the pressure applied on the surface of the fingerprint recognition component 210 when the fingerprint input operation is performed by the user, and each level of operation can correspond to a different function. When the fingerprint recognition IC performs recognition on the input fingerprint and the recognition is successful (for example, matching with a fingerprint template having a similarity higher than a certain threshold), if the pressure applied on the surface of the fingerprint recognition component 210 by the user is larger and exceeds a preset first pressure threshold, the operation type of the user's fingerprint input operation can be regarded as the heavy press input operation. On the other hand, if the pressure applied on the surface of the fingerprint recognition component 210 is smaller and does not exceed the preset first pressure threshold, the operation type of the user's fingerprint input operation can be regarded as the light touch input operation. When the processor of the electronic apparatus receives the corresponding first successful fingerprint recognition response or second successful fingerprint recognition response, the processor performs different functional steps according to the operation type indicated by the first successful fingerprint recognition response or the second successful fingerprint recognition response.

For example, in the case of the electronic apparatus as a smart phone, it is assumed that the electronic apparatus is in a screen locked state, the heavy press input operation corresponds to enabling a certain third party application APP (such as a camera), and the light touch input operation corresponds to unlocking the screen of the electronic apparatus. In this case, when the user wants to unlock the screen, the user can lightly touch the surface of the fingerprint recognition component 210 using the finger. When the fingerprint recognition component 210 recognizes the fingerprint of the finger successfully, the fingerprint recognition component 210 sends the first successful fingerprint recognition response to the processor according to the determined pressure value suffered by the surface of the fingerprint recognition component 210, and the processor unlocks the screen according to the first successful fingerprint recognition response. When the user wants to directly enable the camera in the screen locked state, the user can heavily press the surface of the fingerprint recognition component 210 using the finger. When the fingerprint recognition component 210 recognizes the fingerprint of the finger successfully, the fingerprint recognition component 210 sends the second successful fingerprint recognition response to the processor according to the determined pressure value suffered by the surface of the fingerprint recognition component 210, and the processor unlocks the screen and enables the camera according to the second successful fingerprint recognition response.

Optionally, the fingerprint recognition IC 210b is further configured to recognize the input fingerprint corresponding to the fingerprint input operation when the determined pressure value is greater than a second pressure threshold.

In another possible implementation of the embodiments of the present disclosure, the fingerprint recognition IC 210b can detect whether the input operation is the user's misoperation according to the pressure value suffered by the surface of the fingerprint recognition component 210.

In practical application, when the user uses the electronic apparatus such as a mobile phone, the user is likely to mistakenly or carelessly touch a certain button of the electronic apparatus, especially for the fingerprint recognition component. In order to ensure the recognition effect, the sensitivity thereof is usually very high, and the light touch on the fingerprint recognition component by the finger can usually trigger the fingerprint recognition. However, during the usage process of the user, many operations of lightly touching the fingerprint recognition component are the user's misoperation. When the user normally enters the fingerprint, a certain pressure may be applied to the fingerprint recognition component. In this regard, in the embodiment of the present disclosure, when it is detected that there is a fingerprint input operation, it is possible to firstly detect whether the pressure applied on the fingerprint recognition component is greater than a preset second pressure threshold. If so, the operation is regarded as the normal operation of the user, and the step of the subsequent fingerprint recognition may be performed. Otherwise, the operation is regarded as the misoperation of the user, and the step of fingerprint recognition is not performed. Therefore, the detection for the misoperation of the input fingerprint of the user is achieved, which avoids the fingerprint recognition in the case of the user's misoperation, thereby improving the intelligent degree of the electronic apparatus and reducing unnecessary power consumption.

In view of the above, the fingerprint recognition component provided by embodiments of the present disclosure includes a fingerprint sensor component, a fingerprint recognition IC and a reference electrode disposed below the fingerprint sensor component, the fingerprint sensor component is electrically connected with the fingerprint recognition IC, the fingerprint sensor component contains a sensing electrode, and the fingerprint recognition IC is configured to monitor a capacitance change amount between the sensing electrode and the reference electrode when a fingerprint input operation performed on the fingerprint sensor component is detected, and determine a pressure value applied on the fingerprint sensor component in accordance with the capacitance change amount. The reference electrode is disposed below the fingerprint sensor component in the fingerprint recognition component of the electronic apparatus, and the reference electrode and the sensing electrode included in the fingerprint sensor component constitute a capacitor. When the fingerprint recognition IC detects that there is a fingerprint input operation, the fingerprint recognition IC can determine the pressure value on the fingerprint recognition component by monitoring the capacitance change between the reference electrode and the sensing electrode, in order to carry out the subsequent differential processing, thereby expanding application scenarios of the fingerprint recognition, and improving the user experience.

Fig. 4 is a flowchart showing a pressure detection method according to an exemplary embodiment. This method is applied in the fingerprint recognition IC of the fingerprint recognition component, and the fingerprint recognition component may be the fingerprint recognition component in the embodiment shown in above Fig. 1 or 2. As shown in Fig. 4, the method may include the following steps.

In step 401, a capacitance change amount between the sensing electrode and the reference electrode is monitored, when a fingerprint input operation performed on the fingerprint sensor component is detected.

In step 402, a pressure value applied on the fingerprint sensor component is determined in accordance with the capacitance change amount.

In step 403, a successful fingerprint recognition response is generated in accordance with the determined pressure value, when an input fingerprint corresponding to the fingerprint input operation is recognized and the recognition is successful. Then, the successful fingerprint recognition response is sent to the processor.

In particular, the generation of the successful fingerprint recognition response may include:

When the recognition for the input fingerprint is successful and the pressure value is greater than the first pressure threshold, a first successful fingerprint recognition response is generated, and the first successful fingerprint recognition response is used to indicate that an operation type of the fingerprint input operation is a heavy press input operation. Alternatively, when the recognition for the input fingerprint is successful and the pressure value is not greater than the first pressure threshold, a second successful fingerprint recognition response is generated, and the second successful fingerprint recognition response is used to indicate that the operation type of the fingerprint input operation is an input operation of light touch.

In an embodiment of the present disclosure, when the user presses the surface of the fingerprint recognition component to perform the fingerprint input operation by the finger, if the fingerprint recognition IC recognizes the input fingerprint successfully, the fingerprint recognition IC may also generate a successful fingerprint recognition response, wherein the responses of successful fingerprint recognition corresponding to different pressure values may also different from each other. Thus the processor in the electronic apparatus can perform different operations after the successful fingerprint recognition according to the different pressure values, thereby realizing the multi-level pressure application based on the fingerprint recognition, expanding application scenarios of the fingerprint recognition, and improving the user experience.

For example, the electronic apparatus can divide the user's fingerprint input operation into two levels according to the pressure applied on the surface of the fingerprint recognition component when the fingerprint input operation is performed by the user, and each level of operation can correspond to a different function. When the fingerprint recognition IC performs recognition on the input fingerprint and the recognition is successful (for example, matching with a fingerprint template having a similarity higher than a certain threshold), if the pressure applied on the surface of the fingerprint recognition component by the user is larger, which exceeds a preset first pressure threshold, the operation type of the user's fingerprint input operation can be regarded as the heavy press input operation. On the other hand, if the pressure applied on the surface of the fingerprint recognition component is smaller, which does not exceed the preset first pressure threshold, the operation type of the user's fingerprint input operation can be regarded as the light touch input operation. When the processor of the electronic apparatus receives the corresponding first successful fingerprint recognition response or second successful fingerprint recognition response, the processor performs different functional steps according to the operation type indicated by the first successful fingerprint recognition response or the second successful fingerprint recognition response.

For example, in the case of the electronic apparatus as a smart phone, it is assumed that the electronic apparatus is in a screen locked state, the heavy press input operation corresponds to enabling a certain third party application APP (such as a camera), and the light touch input operation corresponds to unlocking the screen of the electronic apparatus. In this case, when the user wants to unlock the screen, the user can lightly touch the surface of the fingerprint recognition component using the finger. When the fingerprint recognition component recognizes the fingerprint of the finger successfully, the fingerprint recognition component sends the first successful fingerprint recognition response to the processor according to the determined pressure value suffered by the surface of the fingerprint recognition component, and the processor unlocks the screen according to the first successful fingerprint recognition response. When the user wants to directly enable the camera in the screen locked state, the user can heavily press the surface of the fingerprint recognition component using the finger. When the fingerprint recognition component recognizes the fingerprint of the finger successfully, the fingerprint recognition component sends the second successful fingerprint recognition response to the processor according to the determined pressure value suffered by the surface of the fingerprint recognition component, and the processor unlocks the screen and enables the camera according to the second successful fingerprint recognition response.

In view of the above, in the fingerprint recognition method provided by the embodiment of the present disclosure, a reference electrode is disposed below the fingerprint sensor component in the fingerprint recognition component of the electronic apparatus, and the reference electrode and the sensing electrode included in the fingerprint sensor component constitute a capacitor. When the fingerprint recognition IC detects that there is a fingerprint input operation, the fingerprint recognition IC can determine the pressure value on the fingerprint recognition component by monitoring the capacitance change between the reference electrode and the sensing electrode, in order to carry out the subsequent differential processing, thereby expanding application scenarios of the fingerprint recognition, and improving the user experience.

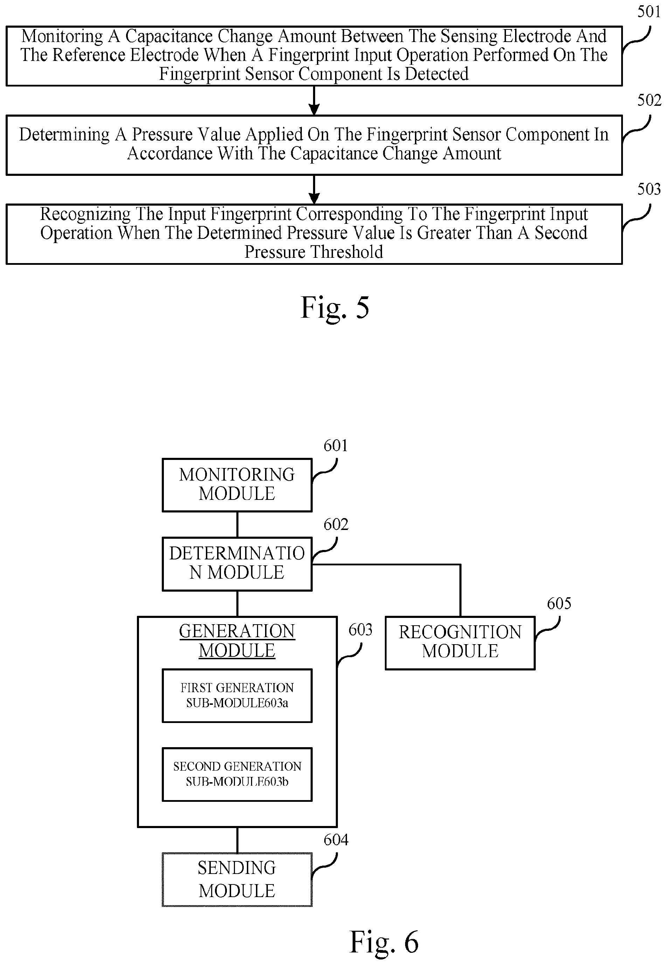

Fig. 5 is a flowchart showing a pressure detection method according to an exemplary embodiment. This method is applied in the fingerprint recognition IC of the fingerprint recognition component, and the fingerprint recognition component may be the fingerprint recognition component in the embodiment shown in above Fig. 1 or 2. As shown in Fig. 5, the method may include the following steps.

In step 501, a capacitance change amount between the sensing electrode and the reference electrode is monitored when a fingerprint input operation performed on the fingerprint sensor component is detected.

In step 502, a pressure value applied on the fingerprint sensor component is determined in accordance with the capacitance change amount.

In step 503, the input fingerprint corresponding to the fingerprint input operation is recognized when the determined pressure value is greater than a second pressure threshold.

In practical application, when the user uses the electronic apparatus such as a mobile phone, the user is likely to mistakenly or carelessly touch a certain button of the electronic apparatus, especially for the fingerprint recognition component. In order to ensure the recognition effect, the sensitivity thereof is usually very high, and the light touch on the fingerprint recognition component by the finger can usually trigger the fingerprint recognition. However, during the usage process of the user, many operations of lightly touching the fingerprint recognition component are the user's misoperation. When the user normally enters the fingerprint, a certain pressure may be applied to the fingerprint recognition component. In this regard, in the embodiment of the present disclosure, when it is detected that there is a fingerprint input operation, it is possible to firstly detect whether the pressure applied on the fingerprint recognition component is greater than a preset second pressure threshold. If so, the operation is regarded as the normal operation of the user, and the step of the subsequent fingerprint recognition may be performed. Otherwise, the operation is regarded as the misoperation of the user, and the step of fingerprint recognition is not performed. Therefore, the detection for the misoperation of the input fingerprint of the user is achieved, which avoids the fingerprint recognition in the case of the user's misoperation, thereby improving the intelligent degree of the electronic apparatus and reducing unnecessary power consumption.

In view of the above, in the fingerprint recognition method provided by the embodiment of the present disclosure, a reference electrode is disposed below the fingerprint sensor component in the fingerprint recognition component of the electronic apparatus, and the reference electrode and the sensing electrode included in the fingerprint sensor component constitute a capacitor. When the fingerprint recognition IC detects that there is a fingerprint input operation, the fingerprint recognition IC can determine the pressure value on the fingerprint recognition component by monitoring the capacitance change between the reference electrode and the sensing electrode, in order to carry out the subsequent differential processing, thereby expanding application scenarios of the fingerprint recognition, and improving the user experience.

Fig. 6 is a block diagram showing a fingerprint recognition IC according to an exemplary embodiment. The fingerprint recognition IC can be realized as the fingerprint recognition IC in the fingerprint recognition component shown in any one of Fig. 1 or 2 by a hardware circuit or a combination of software and hardware, and perform all or part of the steps in the embodiment shown in Fig. 4 or 5. Referring to Fig. 6, the fingerprint recognition IC may include a monitoring module 601 and a determination module 602.

The monitoring module 601 is configured to monitor a capacitance change amount between the sensing electrode and the reference electrode when a fingerprint input operation performed on the fingerprint sensor component is detected.

The determination module 602 is configured to determine a pressure value applied on the fingerprint sensor component in accordance with the capacitance change amount.

Optionally, the fingerprint recognition IC is electrically connected with a processor in an electronic apparatus. The fingerprint recognition IC further includes a generation module 603 and a sending module 604.

The generation module 603 is configured to generate a successful fingerprint recognition response in accordance with the determined pressure value when an input fingerprint corresponding to the fingerprint input operation is recognized and the recognition is successful.

The sending module 604 is configured to send the successful fingerprint recognition response to the processor.

Optionally, the generation module 603 includes a first generation sub-module 603a and a second generation sub-module 603b.

The first generation sub-module 603a is configured to generate a first successful fingerprint recognition response when the recognition for the input fingerprint is successful and the pressure value is greater than the first pressure threshold, the first successful fingerprint recognition response indicating that an operation type of the fingerprint input operation is a heavy press input operation.

The second generation sub-module 603b is configured to generate a second successful fingerprint recognition response when the recognition for the input fingerprint is successful and the pressure value is not greater than the first pressure threshold, the second successful fingerprint recognition response indicating the operation type of the fingerprint input operation is an input operation of light touch.

Optionally, the fingerprint recognition IC further includes a recognition module 605.

The recognition module 605 is configured to recognize the input fingerprint corresponding to the fingerprint input operation when the determined pressure value is greater than a second pressure threshold.

In view of the above, in the fingerprint recognition IC provided by the embodiment of the present disclosure, a reference electrode is disposed below the fingerprint sensor component in the fingerprint recognition component of the electronic apparatus, and the reference electrode and the sensing electrode included in the fingerprint sensor component constitute a capacitor. When the fingerprint recognition IC detects that there is a fingerprint input operation, the fingerprint recognition IC can determine the pressure value on the fingerprint recognition component by monitoring the capacitance change between the reference electrode and the sensing electrode, in order to carry out the subsequent differential processing, thereby expanding application scenarios of the fingerprint recognition, and improving the user experience.

The embodiment of the present disclosure also provides an electronic apparatus. The electronic apparatus includes a fingerprint recognition component, wherein the fingerprint recognition component may be the fingerprint recognition component in the embodiment shown in any one of Fig. 1 or 2.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present invention is not limited to the exact construction that has been described above and illustrated in the accompanying drawings, and that various modifications and changes can be made without departing from the scope thereof. It is intended that the scope of the present disclosure only be limited by the appended claims.

## Claims

1. A fingerprint recognition component, applied in an electronic apparatus and comprising: a fingerprint sensor component (210a), a fingerprint recognition integrated circuit (IC) (210b) and a reference electrode (210c) disposed below the fingerprint sensor component (210a);
the fingerprint sensor component (210a) is electrically connected with the fingerprint recognition IC (210b), and contains a sensing electrode (210d); and
the fingerprint recognition IC (210b) is configured to monitor a capacitance change amount between the sensing electrode (210d) and the reference electrode (210c) when a fingerprint input operation performed on the fingerprint sensor component (210a) is detected, and determine a pressure value applied on the fingerprint sensor component (210a) in accordance with the capacitance change amount.

2. The fingerprint recognition component of claim 1, wherein, the sensing electrode (210d) is composed of a plurality of independent capacitive sensing fingerprint sensors, and the fingerprint recognition component further comprises an all-in-one switch (210e);
all or part of the plurality of independent capacitive sensing fingerprint sensors are electrically connected with one end of the all-in-one switch (210e); and
the other end of the all-in-one switch (210e) is electrically connected with the fingerprint recognition IC (210b).

3. The fingerprint recognition component of claim 1, wherein, the reference electrode (210c) is grounded, or the reference electrode (210c) is applied with an excitation electric signal.

4. The fingerprint recognition component of claim 1, wherein, the fingerprint recognition IC (210b) is electrically connected with a processor in the electronic apparatus,
the fingerprint recognition IC (210b) is further configured to generate a successful fingerprint recognition response in accordance with the determined pressure value when an input fingerprint corresponding to the fingerprint input operation is recognized and the recognition is successful; and send the successful fingerprint recognition response to the processor.

5. The fingerprint recognition component of claim 4, wherein,
the fingerprint recognition IC (210b) is configured to generate a first successful fingerprint recognition response when the recognition for the input fingerprint is successful and the pressure value is greater than a first pressure threshold, the first successful fingerprint recognition response indicating that an operation type of the fingerprint input operation is a heavy press input operation; and
the fingerprint recognition IC (210b) is configured to generate a second successful fingerprint recognition response when the recognition for the input fingerprint is successful and the pressure value is not greater than the first pressure threshold, the second successful fingerprint recognition response indicating that the operation type of the fingerprint input operation is a light touch input operation.

6. The fingerprint recognition component of claim 1, wherein,
the fingerprint recognition IC (210b) is further configured to recognize the input fingerprint corresponding to the fingerprint input operation when the determined pressure value is greater than a second pressure threshold.

7. A pressure detection method, applied in a fingerprint recognition integrated circuit (IC) of a fingerprint recognition component, wherein the fingerprint recognition component further comprises a fingerprint sensor component (210a) and a reference electrode (210c) disposed below the fingerprint sensor component (210a), the fingerprint sensor component (210a) is electrically connected with the fingerprint recognition IC, and contains a sensing electrode (210d), the method comprises:
monitoring (401) a capacitance change amount between the sensing electrode (210d) and the reference electrode (210c) when a fingerprint input operation performed on the fingerprint sensor component (210a) is detected; and
determining (402) a pressure value applied on the fingerprint sensor component (210a) in accordance with the capacitance change amount.

8. The method of claim 7, wherein, the fingerprint recognition IC is electrically connected with a processor in an electronic apparatus, and the method further comprises:
generating a successful fingerprint recognition response in accordance with the determined pressure value when an input fingerprint corresponding to the fingerprint input operation is recognized and the recognition is successful; and
sending the successful fingerprint recognition response to the processor.

9. The method of claim 8, wherein, the generating the successful fingerprint recognition response in accordance with the determined pressure value when the input fingerprint corresponding to the fingerprint input operation is recognized and the recognition is successful comprises:
generating a first successful fingerprint recognition response when the recognition for the input fingerprint is successful and the pressure value is greater than a first pressure threshold, the first successful fingerprint recognition response indicating that an operation type of the fingerprint input operation is a heavy press input operation; and
generating a second successful fingerprint recognition response when the recognition for the input fingerprint is successful and the pressure value is not greater than the first pressure threshold, the second successful fingerprint recognition response indicating that the operation type of the fingerprint input operation is a light touch input operation.

10. The method of claim 7, wherein, the method further comprises:
recognizing (503) the input fingerprint corresponding to the fingerprint input operation when the determined pressure value is greater than a second pressure threshold.

11. A fingerprint recognition integrated circuit (IC), applied in a fingerprint recognition component, wherein the fingerprint recognition component further comprises a fingerprint sensor component (210a) and a reference electrode (210c) disposed below the fingerprint sensor component (210a), the fingerprint sensor component (210a) is electrically connected with the fingerprint recognition IC (210b), and contains a sensing electrode (210d), and the fingerprint recognition IC (210b) comprises:
a monitoring module (601) configured to monitor a capacitance change amount between the sensing electrode (210d) and the reference electrode (210c) when a fingerprint input operation performed on the fingerprint sensor component is detected; and
a determination module (602) configured to determine a pressure value applied on the fingerprint sensor component (210a) in accordance with the capacitance change amount.

12. The fingerprint recognition IC of claim 11, wherein, the fingerprint recognition IC is electrically connected with a processor in an electronic apparatus, and the fingerprint recognition IC further comprises:
a generation module (603) configured to generate a successful fingerprint recognition response of in accordance with the determined pressure value when an input fingerprint corresponding to the fingerprint input operation is recognized and the recognition is successful; and
a sending module (604) configured to send the successful fingerprint recognition response to the processor.

13. The fingerprint recognition IC of claim 12, wherein, the generation module comprises:
a first generation sub-module (603a) configured to generate a first successful fingerprint recognition response when the recognition for the input fingerprint is successful and the pressure value is greater than a first pressure threshold, the first successful fingerprint recognition response indicating that an operation type of the fingerprint input operation is a heavy press input operation; and
a second generation sub-module (603b) configured to generate a second successful fingerprint recognition response when the recognition for the input fingerprint is successful and the pressure value is not greater than the first pressure threshold, the second successful fingerprint recognition response indicating that the operation type of the fingerprint input operation is a light touch input operation.

14. The fingerprint recognition IC of claim 11, wherein, the fingerprint recognition IC further comprises:
a recognition module (605) configured to recognize the input fingerprint corresponding to the fingerprint input operation when the determined pressure value is greater than a second pressure threshold.

15. An electronic apparatus, comprising the fingerprint recognition component of any one of claims 1 to 6.
